# EUROPEAN PATENT APPLICATION

(11) **EP 4 576 244 A1**
(43) Date of publication of application: **25.06.2025**
(21) Application number: 23219428.2
(22) Date of filing: 21.12.2023
(51) Int. Cl.: H01M 4/133, H01M 4/134, H01M 4/36, H01M 4/583, H01M 4/62, H01M 10/052, H01M 4/02

(54) **ANODE FOR AN ELECTROCHEMICAL ENERGY STORAGE DEVICE**

(71) Applicant: Cellforce Group GmbH, 72138 Kirchentellinsfurt (DE)
(72) Inventor: SOMMER, Heino, 76344 Eggenstein-Leopoldshafen (DE); GRAF, Maximilian, 80802 München (DE); HUCKE, Thomas, 01309 Dresden (DE)
(74) Representative: Michalski Hüttermann & Partner Patentanwälte mbB

(57) **Abstract**

The present invention relates to an anode (110) for an electrochemical energy storage device (100), at least comprising
- a silicon-carbon composite material (10) in the amount of ≥ 45 wt.-% to ≤ 96 wt.-%, relating to the anode (110),
- an anisometric flake graphite in the amount of ≥ 2 wt.-% to ≤ 45 wt.-%, relating to the anode (110);
- carbon nanotubes in the amount of > 0 wt.-% to < 1 wt.-%, relating to the anode (110); and
- a binder, in particular a polymer binder, in the amount of 0.5 wt.-% to 4 wt.-%, relating to the anode (110).

## Description

The present invention relates to an anode for an electrochemical energy storage device, such as for a secondary battery. In particular, the present invention relates to an anode for an electrochemical storage device which comprises a silicon carbon composite material. The present invention further relates to an electrochemical energy storage device comprising such an anode as well as to an electrically driven vehicle comprising such an electrochemical energy storage device.

Electrochemical energy storage devices are widely known in the art. Particularly in view of the advancing electrification of vehicles, electrochemical energy storage devices are becoming increasingly important. With this regard, especially the charging time as well as the cycle stability becomes more important to gain better acceptance in the market.

Due to the rapidly increasing importance of electrochemical energy storage devices, in particular Li-ion batteries, there is a continuous need for further development and improvement in the field of formation of such devices.

Based on the above, it is an object of the present invention to overcome at least one disadvantage of the prior art, at least partially. It is particularly an object of the present invention to provide an electrochemical energy storage device which shows good cycling stability and long lifetime.

This object is solved by an anode for an electrochemical energy storage device having the features of claim 1. This object is further solved by an electrochemical energy storage device having the features of claim 12 as well as by an electrically driven vehicle having the features of claim 16. Preferred embodiments of the invention are described in the dependent claims and the following description, each of which may individually or in combination represent an aspect of the invention unless explicitly excluded. Where a feature is shown in combination with another feature, this is for simplified illustration of the invention only and is in no way intended to imply that this feature cannot be a further feature of the invention without the other feature.

Described is an anode for an electrochemical energy storage device, at least comprising
- a silicon-carbon composite material in the amount of ≥ 45 wt.-% to ≤ 96 wt.-%, relating to the anode,
- an anisometric flake graphite in the amount of ≥ 2 wt.-% to ≤ 45 wt.-%, relating to the anode;
- carbon nanotubes in the amount of > 0 wt.-% to < 1 wt.-%, relating to the anode; and
- a binder, in particular a polymer binder, in the amount of 0.5 wt.-% to 4 wt.-%, relating to the anode.

The above-named components may sum up to 100 wt.-% relating to the anode.

Such an anode shows significant improvements when used in an electrochemical energy storage device, especially in a lithium battery, like shown in more detail down below.

The predescribed materials, such as in particular the silicon-carbon composite material, anisometric flake graphite, carbon nanotubes, all present in a binder, may form the anode and are provided on a metal foil, in order to form the final anode electrode for an electrochemical storage device.

The anode as described comprises a silicon-carbon composite material in the amount of ≥ 45 wt.-% to ≤ 96 wt.-%, and preferably a silicon-carbon composite material in the amount of ≥ 61 to ≤ 90% wt.-%, relating to the anode. An amount relating to the anode shall generally mean an amount which relates to the anode material, i.e. to the material which is coated on the current collector.

Such a silicon carbon composite material may also be named silicon-carbon composite mixture. Preferably, the anode as described comprises a silicon-carbon composite material in the amount of ≥ 70 wt.-% to ≤ 88 wt.-%, such as in the amount of ≥ 75 wt.-% to ≤ 86 wt.-%, preferably in the amount of ≥ 77 wt.-% to ≤ 85 wt.-%, relating to the anode.

The term carbon refers to a material or substance consisting of carbon or at least comprising carbon. In this regard, a carbon material may comprise high purity, amorphous and crystalline materials. A carbon may be an activated carbon, a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel, an activated polymer aerogel, or a combination thereof. In a further embodiment, a carbon is producible by a pyrolysis of coconut shells or other organic waste. In this regard, a polymer is a molecule comprising two or more repeating structural units. A porous carbon offers the advantage that it is usually easy to produce, usually has low impurities and a large pore volume. As a result, a porous carbon exhibits good electrical conductivity and high mechanical and chemical stability. In one embodiment, the carbon material has a high micropore volume ratio like described in more detail below.

In one further embodiment, the carbon is a hard carbon material, a graphitic carbon, or a oxide containing compound. For example, the oxide containing compound is a silicon oxide (SiO₂). Alternatively, a oxide containing compound is a titanium oxide (TiO₂), a tin oxide (SnO₂), or other oxides. A hard carbon material is a non-graphitizable carbon material. A hard carbon offers the advantage that it remains amorphous at elevated temperatures (typically > 1500 °C), whereas a "soft" carbon crystallizes and becomes graphite.

In one embodiment, the carbon may be a modified hard carbon. A modified hard carbon is a composite material comprising both a carbon, in particular a hard carbon, and a lithium alloy material. A lithium alloy material may be silicon, tin, germanium, nickel, aluminum, manganese, alumina (Al₂O₃), titanium, titanium oxide, sulphur, molybdenum, arsenic, gallium, phosphorus, selenium, antimony, bismuth, tellurium or indium or any other metal or metalloid capable of absorbing lithium.

The silicon portion may be a pure silicon or a material composition comprising silicon. For example, the silicon portion may be at least one alloy. An alloy may be a silicon-titanium alloy (Si-Ti), a silicon iron alloy (Si-Fe), a silicon nickel alloy (Si-Ni). In a further embodiment, the silicon portion may consist of P-dopants, As-dopants or N-dopants. A P-dopant is usually a phosphorus dopant, an As-dopant is usually an arsenic dopant and an N-dopant is usually a nitrogen dopant.

The presence of silicon in the silicon carbon composite material may be advantageous as in general, silicon comprises a significantly higher energy density than, e.g., graphite. For example, the energy density of silicon exceeds the energy density of graphite by a factor of ten.

It may further be provided that the anode comprises additionally to the described (first) silicon carbon composite material a further silicon-carbon composite material being different to the first silicon carbon composite material. In a further embodiment, the anode may comprise a further carbon and/or a further binder like described below. The at least one further carbon and/or the at least one binder may be dissolved in an aqueous medium. A further carbon may be a hard carbon material or a graphitic carbon or a oxide containing compound.

The anode according to the invention further comprises graphite, wherein graphite is present in an anisometric flake form. According to the present invention, an anisometric flake graphite shall in the broadest sense mean that the graphite is fully unsymmetrical or at least has unsymmetrical parts. Further, a flake form shall comprise each of flaky small, flaky large and ultraflaky as outlined below.

Preferably, anisometric flake graphite may be defined by at least one of the following properties, for example by two or by all of the following properties:
- a particle size diameter (PSD), defined as D90 by laserdiffraction, in the range of ≥ 3 µm to ≤ 50 µm;
- a tap density, derivable by DIN EN ISO 787-11, ASTM B527, in the range of 0,05 to 0,5 g/cm³; and/or
- the specific surface area by nitrogen adsorption (SSA BET), derivable by ASTM C1069, ISO 9277:2022, in the range of ≥ 5 to ≤ 35 m²/g.

Further, anisometric graphite may have a crystallinity, determined as LC value by the x-ray diffraction method, in the range of ≥ 90 nm, such as ≥ 100 nm for small particles and such as ≥ 150 nm for large particles.

The particle size diameter, the tap density and the specific surface area may further be divided in three ranges within the before-defines ranges, thereby being distinct with regard to size. These values are shown in table 1 in which the respective values are compared to respective values of generally uses round or rounded graphite particles.

All ranges may as such form a feature of the present invention, wherein different two or three of the properties particle size diameter, tap density and specific surface area may also be combined.

Flaky graphite may also be free of any coating provided on the respective particles, which is in contrast to round graphite particles known from the prior art.

With regard to table 1, non-determined values are identified by n.d.

**Table 1**

| property | Flaky graphite small, SFG6L | Flaky graphite large, SFG15L | Ultraflaky, Expanded graphite | Roundded, coated graphite |
|---|---|---|---|---|
| PSD_D90, [µm] | ≥ 5 to ≤ 8 | ≥ 13 to ≤ 19 | ≥ 35 to ≤ 45 | 15 |
| | typically 6 | typically 17 | typically 38 | |
| Tap density [g/cm³] | ≥ 0,12 to ≤ 0,14 | ≥ 0,23 to ≤ | < 0,1 | >0,96 |
| | | 0,29 typically | | |
| | Typically 0,13 | 0,27 | | |
| SSA BET [m²/g], | ≥ 15 to ≤ 18 | ≥ 7 to ≤ 11 | ≥ 5 to ≤ 8 | 2,9 |
| | typically 17 | typically 9 | typically 26 | |
| Crystallinity, LC [nm] | >100 | >150 | > 30 | n.d. |

Graphite is generally known as an anode material for lithium batteries, or lithium ion batteries, respectively. In general, graphite is a superior anode material and is known for a long time for lithium ion batteries, benefiting from its incomparable balance of relatively low cost, abundance, high energy density, power density, and very long cycle life. However, in prior art electrochemical energy storage devices, graphite is mostly present as the predominant material in terms of amount in the composition. In contrast to such an arrangement and according to the present invention, graphite is present in the anode in a comparably small amount, i.e. in an amount of ≥ 2 wt.-% to ≤ 45 wt.-%, preferably in an amount of ≥ 4 wt.-% to ≤ 21 wt.-%, such as in an amount of ≥ 8 wt.-% to ≤ 16 wt.-%, relating to the anode.

It was surprisingly found that exchanging a huge amount of graphite by the carbon silicon composite material allows even improved characteristics compared to pure graphite or a huge amount of graphite.

It was further shown that especially providing graphite in an isomeric flake-like form provides significant advantages over solutions of the prior art, especially regarding an improved cycle-stability.

Further, the anode as described comprises carbon nanotubes in an amount of > 0 wt.-% to ≤ 1 wt.-%, such as in the amount of ≥ 0.05 wt.-% to ≤ 2 wt.-%, for example, in the amount of ≥ 0.8 wt.-% to ≤ 1,5 wt.-%, relating to the anode. It was surprisingly found that adding carbon nanotubes can enhance the electrochemical properties of the anode and thus of the electrochemical energy storage device even further. In detail, especially the charging time can be further improved.

The carbon nanotubes can be described as an allotrope of carbon with a diameter in the range of 2 to 5 nanometer, for example, having a hollow structure and a high aspect ratio (length/diameter ratio) of about 200 to 5000. Carbon nanotubes such as single wall carbon nanotube (SW-CNT) can exhibit remarkable electrical conductivity. SW-CNT can be grown on silicon substrates using a chemical vapor deposition (CVD) method and represent electrically uniform arrays of single-walled carbon nanotubes. In some embodiments the single wall carbon nanotube as provided as suspension in water with some stabilizing polymers.

With regard to the suspension, these allow an especially easy processing as suspensions of carbon nanotubes in water for a very homogeneous solution.

It was shown that the advantages as described could be reached especially effectively in case the carbon nanotubes comprise single wall carbon nanotubes. However, it is also not excluded from the present invention that the carbon nanotubes are multi-wall carbon nanotubes.

Further, a binder is present in the anode as described, for example in the amount of 0.5 wt.-% to 4 wt.-%, such as in the amount of 0.8 wt.-% to 3 wt.-%, for example in the amount of 0.8 wt.-% to 2 wt.-%relating to the anode. A binder in a manner known per se is a binding agent or binding material. A binder thus refers to a material that can hold together individual components, in particular particles, of a substance, for example a carbon and the silicon-carbon composite material. A binder is typically arranged such that when particles are brought together with a corresponding binder, a cohesive mass is formed which can be further shaped into a new form.

The binder may be configured to bind all compounds as present in the anode, such as in particular, the particularly porous carbon and the silicon content of the first silicon-carbon composite, the graphite and the carbon nanotubes. In a further embodiment, the binder is adapted to bind further materials to at least one of the respective silicon-carbon composites. Thus, a binder is generally arranged to hold together the components of the silicon-carbon composite mixture and optionally further carbon materials of the electrode which may be formed as an anode.

The anode may comprise at least one further binder. This results in the advantage that carbon increases the conductivity of the electrode and thus provides improved conductivity. The at least one further binder further supports the mechanical stability.

The anode may comprise at least two binders, wherein a first binder is arranged to bind the particularly porous carbon and the silicon-carbon portion of the first silicon-carbon composite and the particularly porous carbon and the silicon portion of the at least one further silicon-carbon composite, and wherein the at least one further binder is arranged to bond the first silicon-carbon composite to the at least one further silicon-carbon composite.

Optionally, the silicon-carbon composite material comprises at least one further binder adapted to bond the first material component and the at least one further material component together.

For example, the binder is a styrene-butadiene rubber/carboxymethylcellulose (SBR/CMC) mixture, a polyacrylic acid (PAA) and/or a lithium polyacrylic (LiPAA) or a sodium polyacrylic (NaPAA). In an alternative embodiment, the binder is formed as a fluoropolymer such as a polytetrafluoroethylene (PTFE), a perfluoroalkoxy polymer resin (PFA), a fluorinated ethylene propylene (FEP), a polyethylene tetrafluoroethylene (ETFE), a polyvinyl fluoride (PVF), a polyethylene chlorotrifluoroethylene (ECTFE), a (polyvinylidene fluoride (PCDF), a (polychlorotrifluoroethylene (PCTFE), a trifluoroethanol, or combinations of at least one of these materials with at least one other material. In a further embodiment, a binder is a polyimide or a copolymer of polyacrylic acid and styrene-butadiene. However, it is especially preferred that the binder is a styrene-butadiene rubber/carboxymethylcellulose (SBR/CMC) mixture, a polyacrylic acid (PAA) and/or a lithium polyacrylic (LiPAA) or a sodium polyacrylic (NaPAA).

Generally, the binder may be used in an organic solution or in a water-based solution.

An anode as described shows the advantage of outstanding charging times which allow charging the electrochemical energy storage device from a very low state of charge to a very high state of charge in a very short time. This improves the acceptance in the market significantly.

Especially, thinking about secondary batteries as used in vehicles, the charging time is a significant factor which may improve acceptance of electrically driven vehicles. Therefore, especially improving charging times is an important characteristic of secondary batteries for vehicles, such as cars. However, of course it should be noted that the anode as described here and consequently the electrochemical energy storage device is not limited to use in vehicles.

Apart from the above and additionally to charging times, further characteristics of the anode are not deteriorated, such as long lifetime, high cycling stability and resistance against damages.

In particular, it was found that the anode as described shows a significantly improved cycling stability and thus a long lifetime. This advantage is also of very high importance as in a great amount of applications, batteries shall be charged in a great amount and exchanging batteries comes along with a high cost factor, which shall be avoided.

The silicon-carbon composite mixture, or respectively the silicon-carbon composite material, may be composed such that the silicon-carbon composite mixture has an electrode density ranging from 0.09 g/cm³ to 1.5 g/cm³, or from 1.1 g/cm³ and 1.3 g/cm³. This offers the advantage that the particles comprise better contact with each other and thus the conductivity of the resulting electrode is improved.

Especially, the silicon-carbon composite mixture, or respectively the silicon-carbon composite material, has an electrical conductivity ranging from 0.3 S/cm to 2 S/cm, or from 0.5 S/cm and 1.2 S/cm. This offers the advantage that the resistance of the electrode is reduced, thus allowing a faster reaction of the Li-ions with the silicon-carbon composite mixture. Hence, a charging speed of the lithium-ion cell may be increased.

Preferably, the silicon-carbon composite material has a silicon content in the amount of ≥ 30wt.-% to ≤ 70wt.-%, relating to the silicon-carbon composite material. The silicon content of the total mass of the silicon-carbon composite material is usually between 18wt.-% and 40wt.-%, especially between 26wt.-% and 36 wt.-%. According to a further embodiment the silicon content of the total mass of the silicon-carbon composite material is usually between 30wt.-% and 50wt.-%, especially between 37wt.-% and 46wt.-%. These embodiments may improve charging process in particular in regard to charging times in a very efficient manner.

It may further be preferred that the silicon-carbon composite material has a carbon scaffold with pores, wherein the pores have a total pore volume of ≥ 0.5 cm³/g. Typically, the porous carbon has a pore space, also referred to as a pore volume, wherein the pore space is a group of voids (pores) in the carbon that is fillable with a gas or fluid. This embodiment on the one hand significantly may reduce weight of the anode and thus of the electrochemical energy storage device.

This embodiment may be of outermost importance especially in case the anode and thus the electrochemical energy storage device is used in mobile applications, such as in vehicles. Apart from that, the electrochemical properties may also be improved. With this regard, A porous arrangement offers the advantage that it is usually easy to produce, usually has low impurities and a large pore volume. As a result, a porous carbon exhibits good electrical conductivity and high mechanical and chemical stability.

Preferably, the silicon-carbon composite material is present in a bimodal particle size distribution. It is particularly preferred that a first particle size Dv50 is in the range of 1 µm to < 6 µm and wherein a second particle size Dv50 is in the range of ≥ 6 µm to ≤ 20 µm.

The particle size distribution can be measured as known in the art. For example, the particle size distribution can be measured by laser light scattering of the particles in suspension, or a powder time-of-flight methodology, or other methods known in the art. The particle size distribution can be expressed as the number particle distribution or volume particle distribution, as known in the art. Accordingly, the particle size distribution can be expressed as Dvx, where D represents particle diameter, v represents the value corresponding to volume basis, and x represents the cumulative percentage of particles. For example, Dv1, Dv10, Dv50, Dv90, and Dv99 are the diameter at which 1%, 10%, 50%, 90%, and 99% of the plurality of particles in the given volume distribution reside below the named micron size. The particle size distribution is bounded by the D0 (smallest particle in the distribution) and Dv100 (maximum size of the largest particle); the Dv50 is the volume average particle size. The particle size distribution can be described in terms of one of more modes present in the particle size distribution, where the concept of mode is known in the art, for example is a maxima in the distribution. Particle size distributions can be monomodal or multimodal such as bimodal or trimodal. Modes within multimodal particle size distributions can comprise distinct local maxima within the particle distribution and/or shoulders that can be resolved from the first and/or second derivative(s) of the particle size distribution.

The present disclosure offers the advantage that the bimodal distribution of the composite enables a higher packing density and improved electrical conductivity of an anode electrode.

In a further embodiment, the bimodal silicon-carbon composite comprises at least one further carbon and/or at least one further binder. This results in the advantage that carbon increases the conductivity of the electrode and thus provides improved conductivity. The at least one further binder further supports the mechanical stability. A further carbon may be a hard carbon material or a graphitic carbon or a metal oxide. For example, the oxide containing compound is a silicon oxide (SiO₂). Alternatively, a metal oxide is a titanium oxide (TiO₂), a tin oxide (SnO₂) or other metal oxide. A hard carbon material is a non-graphitizable carbon material. A hard carbon offers the advantage that it remains amorphous at elevated temperatures (typically > 1500 °C, whereas a "soft" carbon crystallizes and becomes graphite).

In one embodiment, the at least one further carbon and/or the at least one further binder is dissolved in an aqueous medium.

In a further embodiment, the multimodal silicon-carbon composite material is composed such that the silicon-carbon composite material has an electrode density of 0.9 g/cm³ to 1.5 g/cm³, in particular between 1.1 g/cm³ and 1.3 g/cm³. This offers the advantage that the particles comprise better contact with each other and thus the conductivity of the resulting electrode is improved.

Alternatively, it may also be advantageous that the silicon-carbon composite material is present in a monomodal particle size distribution. With this regard, it may be particularly preferred that the particle size Dv50 is in the range of ≥ 7 µm to < 12 µm. This embodiment efficiently reduces or avoids side reactions, as comparably large particles have a smaller surface area.

It may further be preferred that the surface area of the silicon-carbon composite material is less than 30 m²/g. The surface area is measured according to the BET measurement which is a term for an analytical method for determining the size of surfaces, in particular porous solids, by means of gas adsorption. In a further embodiment, the BET surface area is between 4 m³/g and 25 m³/g.

This offers the advantage that the resistance of the electrode is reduced, thus allowing a faster reaction of the Li-ions with the multimodal Si-C-composite material. Hence, a charging speed of the lithium-ion cell may be further increased.

The anode may further comprise carbon black in an amount of ≥ 0.5 wt.-% to ≤ 2 wt.-%, relating to the anode. The provision of carbon black may improve the electrical properties of the anode even further. As an example, carbon black delivers superior conductivity in the anode, which in turn yields a number of performance and cost benefits for lithium-ion batteries, for example.

In a particularly preferred embodiment, the anode may comprise
- a silicon-carbon composite material in the amount of ≥ 70 wt.-% to ≤ 88 wt.-%, relating to the anode, and a silicon content in the amount of ≥ 26 wt.-% to ≤ 32 wt.-%, relating to the silicon carbide composite material;
- anisometric flake graphite in the amount of ≥ 2 wt.-% to ≤ 45 wt.-%, relating to the anode;
- carbon nanotubes in the amount of > 0 wt.-% to ≤ 1 wt.-%, relating to the anode;
- carbon black in the amount of ≥ 0.5 wt.-%, to ≤ 2 wt.-%, relating to the anode; and
- a binder in the amount of ≥ 0,5 wt.-% to < 4 wt.-%, relating to the anode.

In one further embodiment the anode electrode has a density comprising E greater than 0.01, such as greater than 0.05 or greater than 0.1 wherein E is defined as 1-(tap density for composite mixture) / (mass averaged tap density for individual fractions), wherein density is the electrode density as measured in an electrode composed of 70 wt% composite, 20 wt% graphite, and 2 wt% Super C65, and 8% PAA.

The tap density of particulate silicon-carbon composite material(s) and silicon-carbon composite mixture can be measured as known in the art. For example, tap density can be measured with a PT-TD300 Tap Density Tester, wherein a known mass of powder is loaded into a graduated cylinder, for example until filling the graduated cylinder to ½ to ¾ of its total capacity, the cylinder is loaded into the testing device, and the loaded cylinder tapped for a fixed number of taps (e.g., 250 taps) and the new tapped volume recorded, and this tapping process repeated until the point where the measured volume is no longer changing, for example within 2% of the previous reading.

In one further embodiment for the determination of E measurement of electrode properties of the silicon-carbon composite mixture and the individual fractions comprising each mode are measured under otherwise identical conditions.

Accordingly, one embodiment provides an anode comprising:
a) a first silicon-carbon composite material comprising:
   i. a porous carbon scaffold comprising micropores and mesopores and a total pore volume no less than 0.5 cm³/g;
   ii. a silicon content from 30% to 70% by mass, relating to the silicon-carbon composite material;
   iii. a plurality of particles comprising a Dv50 of 6 µm to 20 µm;
b) at least one further silicon-carbon composite material comprising:
   i. at least one further carbon scaffold comprising micropores and mesopores and a total pore volume no less than 0.5 cm³/g;
   ii. a silicon content from 30% to 70% by mass, relating to the silicon-carbon composite material;
   iii. a plurality of particles comprising a Dv50 of 1 µm to 6 µm; and
c) 10% to 90% by mass of the first silicon-carbon composite material and 10% to 90 % of the at least one further silicon-carbon composite material, relating to the silicon-carbon composite material.

One additional embodiment provides an anode comprising:
a) a first silicon-carbon composite material comprising:
   i. a porous carbon scaffold comprising micropores and mesopores and a total pore volume no less than 0.5 cm³/g;
   ii. a silicon content from 30% to 70% by mass, relating to the silicon-carbon composite material;
   iii. a plurality of particles comprising a Dv50 of 6 µm to 20 µm;
b) at least one further silicon-carbon composite material comprising:
   i. at least one further carbon scaffold comprising micropores and mesopores and a total pore volume no less than 0.5 cm³/g;
   ii. a silicon content from 30% to 70% by mass, relating to the silicon-carbon composite material;
   iii. a plurality of particles comprising a Dv50 of 1 µm to 6 µm;
c) 10% to 90% by mass of the first silicon-carbon composite material and 10% to 90 % of the at least one further silicon-carbon composite material;
d) a surface area of less than 30 m²/g;
e) E greater than 0.01, wherein E is defined as 1-(tap density for composite mixture) / (mass averaged tap density for individual fractions); and
f) for the determination of E measurement of tap density of the silicon-carbon composite mixture and the individual fractions comprising each mode are measured under otherwise identical conditions.

Another embodiment provides an anode comprising:
a) a first silicon-carbon composite material comprising:
   i. a porous carbon scaffold comprising micropores and mesopores and a total pore volume no less than 0.5 cm³/g;
   ii. a silicon content from 30% to 70% by mass, relating to the silicon-carbon composite material;
   iii. a plurality of particles comprising a Dv50 of 6 µm to 20 µm;
b) at least one further silicon-carbon composite material comprising:
   i. at least one further carbon scaffold comprising micropores and mesopores and a total pore volume no less than 0.5 cm³/g;
   ii. a silicon content from 30% to 70% by mass, relating to the silicon-carbon composite material;
   iii. a plurality of particles comprising a Dv50 of 1 µm to 6 µm;
c) 10% to 90% by mass of the first silicon-carbon composite material and 10% to 90 % of the at least one further silicon-carbon composite material, relating to the overall silicon carbide composite material;
d) a surface area of less than 30 m²/g; and
e) E greater than 0.01, wherein E is defined as 1-(conductivity for composite material) / (mass averaged conductivity for individual fractions).

With regard to manufacturing the silicon carbon composite material, an embodiment provides a method to manufacture a silicon-carbon composite mixture comprising the steps:
a) providing a porous carbon scaffold;
b) comminution the porous carbon scaffold to produce at least two particulate fractions, comprising:
   i. a first porous carbon composite material comprising a plurality of particles with Dv50 = 6 µm to 20 µm;
   ii. at least one additional porous carbon composite material comprising a particle size distribution with Dv50 = 1 µm to 6 µm;
c) impregnation of silicon into the pores of the at least two particulate fractions of porous carbon composite materials by chemical vapor infiltration; and
d) blending of the first particulate silicon-carbon composite material and the at least one additional particulate silicon-carbon composite material.

Yet another embodiment provides a method to manufacture a silicon-carbon composite mixture comprising the steps:
a) providing a porous carbon scaffold
b) comminution the porous carbon scaffold to produce at least two particulate fractions, comprising:
   i. a first porous carbon composite material comprising a plurality of particles with Dv50 = 6 µm to 20 µm;
   ii. at least one additional porous carbon composite material comprising a particle size distribution with Dv50 = 1 µm to 6 µm;
c) impregnation of silicon into the pores of the at least two particulate fractions of porous carbon composite materials by chemical vapor infiltration; and
d) applying a coating onto the surface of the at least two particulate fractions of the porous silicon-carbon composite by chemical vapor deposition; and
e) blending of the first particulate silicon-carbon composite material and the at least one additional particulate silicon-carbon composite material.

Thus, generally, the silicon-carbon composite material may be manufactured by infiltrating a porous carbon material with silicon, such as with SiH₄ and/or other gases, such as trimethylaluminium.

One specific embodiment provides a method of manufacturing an anode electrode comprising a silicon-carbon composite mixture as described herein, comprising the steps:
a) mixing the silicon-carbon composite mixture with at least one carbon, such as graphite, and carbon nanotubes to create a mixture,
b) combining the mixture and a binder solution, for example in a twin screw extruder, thereby forming an electrode paste,
c) applying the electrode paste to a conductor thereby producing at least one electrode,
d) drying the at least one electrode such as at a temperature of room temperature to 140 °C.

Following the above, in a first step, a porous carbon scaffold material is produced. In preferred embodiments, the carbon scaffold is prepared according to US Publication No. 2017 / 0015559. In preferred embodiments, the porous carbon scaffold carbon is an amorphous carbon comprising nitrogen. The use of nitrogen (N) improves the conductivity of the amorphous carbon.

In preferred embodiments, the porous carbon scaffold comprises micropores, mesopores, and/or macropores, wherein micropores are defined as pores with diameter less than 2 nm, mesopores are defined as pores with diameter of 2 nm to 50 nm, and mesopores are defined as pores with diameter greater than 50 nm. As used herein, the percentage "microporosity," "mesoporosity" and "macroporosity" refers to the percent of micropores, mesopores and macropores, respectively, as a percent of total pore volume. For example, a carbon scaffold having 90% microporosity is a carbon scaffold where 90% of the total pore volume of the carbon scaffold are micropores.

In a further step, the polymer gel may be pyrolyzed in nitrogen at a temperature of 700 °C to 950 °C to obtain a silicon-carbon composite material.

In a further step, the silicon-carbon composite material is comminuted by grinding to produce at least two silicon-carbon composites having at least two fractions, in particular one of the at least two silicon-carbon composites comprises a particle size distribution with a percentile of Dv50 = 6 µm to 20 µm and another fraction comprises a particle size distribution with a percentile of Dv50 = 1 µm to 6 µm. Such comminution can be accomplished as known in the art, for example abrasion type milling processes such particle size reduction using a hammer mill, ball mill, jet mill, or other abrasion type mill.

The two or more fractions of silicon-carbon composites each comprise a porous carbon scaffold with certain properties, for example properties as disclosed in US Publication No. 2017 / 0170477.

With regard to further advantages and technical features of the anode, it is referred to the electrochemical energy storage device, to the vehicle as well as to the examples and the figures.

Further described is an electrochemical energy storage device, comprising
- an anode like described above;
- a cathode;
- a separator disposed between the cathode and the anode; and
- an electrolyte comprising lithium ions.

The general arrangement of the electrochemical energy storage device may be chosen as generally known in the art. However, an important characteristic of such a device is that it comprises an anode as described in more details above. Further to the anode, the electrochemical energy storage device, or an electrochemical cell of the latter, comprises a cathode. The cathode may generally be formed as known in the art for lithium batteries.

Generally, the cathode may comprise a single crystal (SC) form, a polycrystalline form (PC) or a mixture of single crystal (SC) and polycrystalline (PC) form of layered transition metal oxide materials having the general formula Li₁₊ₓTM₁₋ₓO₂ with TM being Ni, Co, Mn, Al, Zr, Ti, Nb, W. The amount of these metals is preferably as follows: Ni = 0.7 to 0.95, Co = 0.01 to 0.15, Mn = 0.01 to 0.1, Al = 0 to 0.03, Zr = 0 to 0.01, Nb, Ti, W = 0 to 0.02, wherein x may be any value between 0 and 0.05. Further, in case a mixture of single crystal (SC) and polycrystalline (PC) form is present, the mixture ratio may be 20 to 35 wt% SC and 65 to 80% PC.

In particular, the cathode comprises lithium nickel manganese cobalt oxide, wherein the lithium nickel manganese cobalt oxide is present in a mixture of a polycrystalline form and a single crystal form. According to this embodiment, the electrochemical properties of the electrochemical energy storage device may be improved even further, in particular with regard to cycling behavior and in particular with regard to charging time.

With regard to the separator, the latter may generally as well be formed as known in the prior art. Preferably, the separator may comprise a trilayer polymer. Such a polymer may for example comprise an inorganic coating, such as Al₂O₃, BaTiOs.

It may further be preferred that the separator is laminated to the anode. This allows the advantage to improve stacking of electrodes, as the separator is already fixed on the anode electrode.

The electrolyte may comprise at least one compound selected from the group consisting of fluoroethylene carbonate, propylene carbonate, ethylene carbonate, lithium hexafluorophosphate, and lithium bis(fluorosulfonyl)imide. It could be shown that such electrolytes show superior properties when used in lithium batteries. In general, the electrolyte may comprise a mixture of LiPF₆ and LiFSi, wherein the electrolyte may be based on fluoroethylenecarbonate (FEC) based. It may exemplarily comprise 1 to 10 wt.-% FEC, 0 to 20 wt.-% ethylene carbonate (EC), 0 to 30 wt.-% propylene carbonate (PC), each relating to the electrolyte, and optional additional additives.

An electrochemical energy storage device as described above comprising an anode as described shows the advantage of outstanding charging times which allow charging the electrochemical energy storage device from a very low state of charge to a very high state of charge in a very short time. This improves the acceptance in the market significantly.

Especially, thinking about secondary batteries as used in vehicles, the charging time is a significant factor which may improve acceptance of electrically driven vehicles.

Apart from the above and additionally to charging times, further characteristics of the anode are not deteriorated, such as long lifetime, high cycling stability and resistance against damages.

It could be shown that especially an improved cycling stability could be achieved.

With regard to further advantages and technical features of the electrochemical energy storage device, it is referred to the anode, to the vehicle as well as to the examples and the figures.

Further described is an electrically driven vehicle, comprising an electric engine and an electrochemical energy storage device for supplying electrical energy to the electric engine, characterized in that the electrochemical energy storage device is formed like described before.

The vehicle may generally be any vehicle which is electrically driven. In particular, the electrically driven vehicle may be a fully electrically driven vehicle or a so-called hybrid vehicle. However, it may be preferred that the electrically driven vehicle is a fully electrically driven land vehicle, such as a car, a bus or a truck.

Such a vehicle comprises an electric engine and an electrochemical energy storage device for supplying electrical energy to the electric engine.

The electric engine may generally be arranged as known in the art, for example, the electrically driven engine may be a permanent synchronous machine as electric motor or an asynchronous machine as electric motor. Of course, both engines may be present and may be supplied with electrical energy from the electrochemical energy storage device. The latter is designed as defined above.

An anode as described and thus a respective electrochemical energy storage device shows the advantage of outstanding charging times which allow charging the electrochemical energy storage device from a very low state of charge to a very high state of charge in a very short time. Further, the cycle-stability and thus the lifetime is improved. This improves the acceptance in the market significantly.

Especially, thinking about secondary batteries as used in vehicles, the charging time and the cycling stability is a significant factor which may improve acceptance of electrically driven vehicles. Therefore, especially improving charging times is an important characteristic of secondary batteries for vehicles. However, of course ot should be noted that the anode as described here and consequently the electrochemical energy storage device is not limited to use in vehicles.

Apart from the above and additionally to charging times, further characteristics of the anode are not deteriorated, such as long lifetime, high cycling stability and resistance against damages.

It could be shown that especially an improved cycling stability could be achieved.

With regard to further advantages and technical features of the vehicle, it is referred to the anode, to the electrochemical energy storage device as well as to the examples and the figures.

Generally, single or a plurality of features and in particular amounts of respective compounds may be transferred between single embodiments.

In the following, the invention is explained by way of example with reference to the accompanying drawing and the accompanying examples by way of preferred embodiments, wherein the features shown below may each individually or in combination constitute an aspect of the invention:
Fig. 1 shows an exemplary electrochemical storage device with a manufactured anode comprising a silicon-carbon composite material;
Fig. 2 shows a diagram relating to the discharge capacity retention over the cycles in the prior art; and
Fig. 3 shows a diagram relating to the discharge capacity retention over the cycles according to the prior art compared to the invention.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

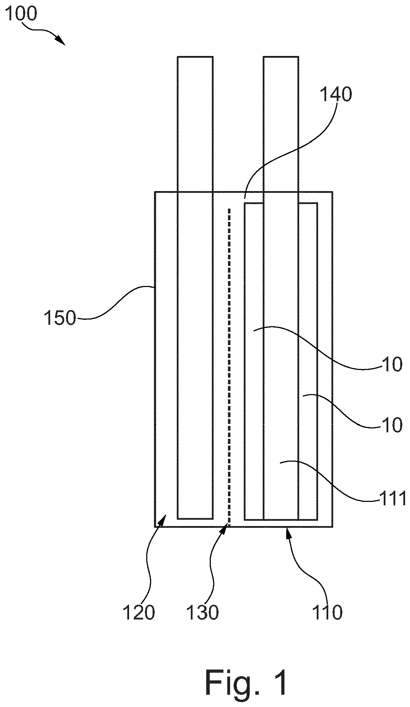

Fig. 1 shows a sectional view of an exemplary electrochemical storage device 100 with an anode 110, also called anode electrode, comprising a silicon-carbon composite material 10.

The electrochemical storage device 100 is formed as a lithium-ion-battery cell. The electrochemical storage device 100 comprises at least one anode 110, at least one cathode 120 and a separator 130 disposed between the cathode 120 and the anode 110. The cathode 120 preferably comprises a transition metal oxide.

Furthermore, an electrolyte 140 comprising lithium ions is provided in a cell housing 150 of the electrochemical storage device 100. The electrochemical storage device 100 can be formed as a lithium-ion-battery cell in a pouch form. Thus, the cell housing 150 may be formed as a aluminum bag. The anode 110, the cathode 120 and the separator 130 are arranged in the cell housing 150, too.

It is noted that Fig. 1 shows a simplified sectional view. The anode 110, the cathode 120 and the separator 130 are usually formed as multiple layers which are winded or folded in order to optimize packaging and in order to increase the possible surface area of the electrolyte 140. In the shown example, only one layer of the components is visible for illustrational purpose.

In the following an exemplary electrochemical energy storage device 100 is provided and the cycling behavior was examined.

According to an embodiment, the electrode may exemplarily comprise the following components in the following amounts in its anode layer which is to be provided on a current collector, see table 2.

**Table 2**

| **Component** | **Amount in [wt.-%] relating to anode** | **Solid content of the component amount in [wt.-%]** |
|---|---|---|
| Si/C - composite material | 83,385 | 100 |
| graphite (SFG6L) | 11,265 | 100 |
| Carbon black | 1,25 | 100 |
| CMC | 1,05 | 2 |
| CNTs | 0,1 | 0,4 |
| CMC in CNT | 0,15 | 0,6 |
| SBR | 2,8 | 48 |
| **Sum** | **100** | |

With regard to table 2, the solid content comprises the pure solid material potentially together with a solvent. Further,

With regard to column 1, the following components were used:
Silicon carbide composite material: SCC 55 by Group 14
Graphite: SFG6L from Imerys
Binder: Carboxymethyl cellulose
SBR Styrene Butadien rubber
Carbon black: C45 by MSE Supplies
CMC in CNT: CMC is included in the CNT Dispersion

Given the compounds as outlined in table 1, an electrode was formed as follows: Carbon black was dry mixed with graphite for 30seconds with a stirrer by using 300 rpm. Then, a solution of 2 wt.-% binder in water and CNT was subsequently added and it was stirred at 2000rpm for 15 minutes after addition of binder and 15 minutes after addition of CNTs. A solution of SBR was then added and it was stirred for 2 minutes at 500 rpm. The formed mixture was then doctor bladed on a current collector arranged as copper foil with a thickness of 50 µm wet film thickness and it was dried at the air at room temperature for 20 minutes and in an oven at 60 °C for 30 minutes. After drying the coating, it was calendared until the coating had a density of 1,0 g/cm³.

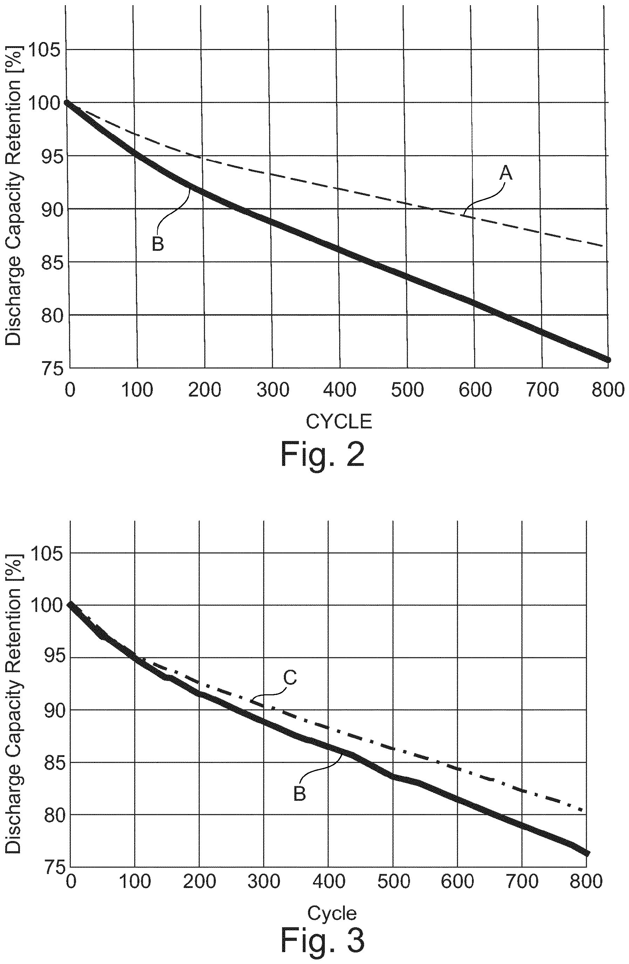

Figure 2 shows the discharge capacity retention over the cycles with a solution of the prior art, wherein curve A relates to an electrode material comprising 30 wt.-% SCC and 65 wt.-% natural graphite, which is round and as generally used coated. The further compounds comprise binder and conductive additives. Curve B relates to an electrode material comprising 70 wt.-% SCC and 24 wt.-% natural graphite, which is round and as generally used coated. The further compounds comprise binder and conductive additives.

It is shown that when the energy density is increased, which is achieved by increasing the proportion of SCC in the anode, the cycle stability decreases with a rounded (natural) graphite. This may be due to the particle contact and electrical conductivity deteriorate. In addition, the rounded graphite (natural graphite) is coated on the surface, wherein the coating consists of electrically poorly conductive hard carbon. Further, the electrode properties, such as electrical conductivity, pore structure and shape, change with decreasing rounded natural graphite - swelling of the SCC material and are poorly compensated by the electrode structure. To summarize, it was shown that increasing the proportion of SCC from 30% to 70%, i.e. reducing the proportion of rounded and surface-coated graphite, leads to a deterioration in cycle stability.

The exact contrast was achieved according to the present invention, see figure 3. Figure 3 shows the discharge capacity over the cycles with a solution according to the present invention, wherein curve C relates to an electrode material comprising 83 wt.-% SCC and 11 wt.-% anisometric flake-like graphite. The further compounds again comprise binder and conductive additives. Curve B relates to an electrode material comprising 70 wt.-% SCC and 24 wt.-% natural graphite, which is round and as generally used coated. The further compounds comprise binder and conductive additives. Thus, curve B in Fig. 3 relates to curve B in fig. 2.

Fig. 3 shows the effect of an increase of the SCC content from 70wt.-% to 83wt.-% and halving of the graphite content and use of flake-like graphite according to the invention. It is shown that, if the flake-like graphite according to the invention is used with a high SCC content, the cycle stability is improved despite the higher SCC content, se especially a comparison between figures 2 and 3. Compared to rounded graphite, flake graphite is significantly more electrically conductive and easier to compact; in addition, the graphite flake leads to a loosened electrode structure that better compensates for swelling.

## Claims

1. Anode (110) for an electrochemical energy storage device (100), at least comprising
- a silicon-carbon composite material (10) in the amount of ≥ 45 wt.-% to ≤ 96 wt.-%, relating to the anode (110),
- an anisometric flake graphite in the amount of ≥ 2 wt.-% to ≤ 45 wt.-%, relating to the anode (110);
- carbon nanotubes in the amount of > 0 wt.-% to < 1 wt.-%, relating to the anode (110); and
- a binder, in particular a polymer binder, in the amount of 0.5 wt.-% to 4 wt.-%, relating to the anode (110).

2. Anode (110) according to claim 1, **characterized in that** the anisometric flake graphite has at least one of the following properties:
- a particle size diameter in the range of ≥ 3 µm to ≤ 50 µm;
- a tap density in the range of 0,05 to 0,5 g/cm³; and/or
- the specific surface area in the range of ≥ 5 to ≤ 35 m²/g.

3. Anode (110) according to claim 1 or 2, **characterized in that** the silicon-carbon composite material (10) has a silicon content in the amount of ≥ 30 wt.-% to ≤ 70 wt.-%, relating to the silicon-carbon composite material (10).

4. Anode (110) according to any of claims 1 to 3, **characterized in that** the silicon-carbon composite material (10) has a carbon scaffold with pores, wherein the pores of the carbon scaffold have a total pore volume of ≥ 0.5 cm³/g.

5. Anode (110) according to any of claims 1 to 4, **characterized in that** the silicon-carbon composite material (10) is present in a bimodal particle size distribution, wherein a first particle size Dv50 is in the range of ≥ 1 µm to < 6 µm and wherein a second particle size Dv50 is in the range of ≥ 6 µm to ≤ 20 µm.

6. Anode (110) according to any of claims 1 to 4, **characterized in that** the silicon-carbon composite material (10) is present in a monomodal particle size distribution, wherein the particle size Dv50 is in the range of ≥ 7 µm to < 12 µm.

7. Anode (110) according to any of claims 1 to 6, **characterized in that** the surface area of the silicon-carbon composite material (10) is less than 30 m²/g.

8. Anode (110) according to any of claims 1 to 7, **characterized in that** the carbon nanotubes are single wall carbon nanotubes.

9. Anode according to any of claims 1 to 8, **characterized in that** the binder is a styrene-butadiene rubber/carboxymethylcellulose (CMC/SBR) mixture, a polyacrylic acid (PAA) and/or a lithium polyacrylic (LiPAA) or a sodium polyacrylic (NaPAA).

10. Anode (110) according to any of claims 1 to 9, **characterized in that** the anode (110) further comprises carbon black in an amount of ≥ 0.5 wt.-% to ≤ 2 wt.-%, relating to the anode (110).

11. Anode (110) according to any of claims 1 to 10, **characterized in that** the anode (110) comprises
- a silicon-carbon composite material (10) in the amount of ≥ 65 wt.-% to ≤ 90 wt.-%, relating to the anode (110);
- anisometric flake graphite in the amount of ≥ 2 wt.-% to ≤ 15 wt.-%, relating to the anode (110);
- carbon nanotubes in the amount of > 0.01 wt.-% to < 0.1 wt.-%, relating to the anode (110);
- carbon black in the amount of > 0.1 wt.-% to < 2 wt.-%, relating to the anode (110); and
- a binder in the amount of > 2 wt.-% to < 4 wt.-%, relating to the anode (110).

12. Electrochemical energy storage device (100), comprising
- an anode (110) according to any of claims 1 to 11;
- a cathode (120);
- a separator (130) disposed between the cathode (120) and the anode (110); and
- an electrolyte (140) comprising lithium ions.

13. Electrochemical energy storage device (100) according to claim 12, **characterized in that** the cathode (120) comprises lithium nickel manganese cobalt oxide, wherein the lithium nickel manganese cobalt oxide is present in a mixture of a polycrystalline form and a single crystal form.

14. Electrochemical energy storage device (100) according to claim 12 or 13, **characterized in that** the separator (130) is laminated to the anode (110).

15. Electrochemical energy storage device (100) according to any of claims 12 to 14, **characterized in that** the electrolyte (140) comprises at least one compound selected from the group consisting of fluoroethylene carbonate, propylene carbonate, ethylene carbonate, lithium hexafluorophosphate, and lithium bis(fluorosulfonyl)imide.

16. Electrically driven vehicle, comprising an electric engine and an electrochemical energy storage device(100) for supplying electrical energy to the electric engine, **characterized in that** the electrochemical energy storage device (100) is formed according to any of claims 12 to 15.
